# EUROPÄISCHE PATENTSCHRIFT

(11) **EP 2 247 989 B1**
(45) Veröffentlichungstag und Bekanntmachung des Hinweises auf die Patenterteilung: **06.01.2016**
(21) Anmeldenummer: 09715414.0
(22) Anmeldetag: 23.02.2009
(51) Int. Cl.: G05B 19/418

(54) **VORRICHTUNG UND VERFAHREN ZUM PROJEKTIEREN VON FELDGERÄTEN EINER TECHNISCHEN ANLAGE**
APPARATUS AND METHOD FOR PROJECTING FIELD DEVICES OF A TECHNICAL SYSTEM
DISPOSITIF ET PROCÉDÉ POUR PLANIFIER L'INTÉGRATION D'APPAREILS DE TERRAIN D'UNE INSTALLATION TECHNIQUE

(30) Priorität: 29.02.2008 EP 08003818
(43) Veröffentlichungstag der Anmeldung: 10.11.2010
(73) Patentinhaber: Siemens Aktiengesellschaft, 80333 München (DE)
(72) Erfinder: STEINHAUER, Guido, 76744 Büchelberg (DE); UNKELBACH, Michael, 91054 Buckenhof (DE)
(86) Internationale Anmeldenummer: PCT/EP2009/052098
(87) Internationale Veröffentlichungsnummer: WO 2009/106495

(56) Entgegenhaltungen:
- WO-A-2005/109122
- DE-A1- 19 639 424
- SIDHU T S ET AL: "Control and automation of power system substation using IEC61850 communication" CONTROL APPLICATIONS, 2005. CCA 2005. PROCEEDINGS OF 2005 IEEE CONFERE NCE ON TORONTO, CANADA AUG. 29-31, 2005, PISCATAWAY, NJ, USA,IEEE, 29. August 2005 (2005-08-29), Seiten 1331-1336, XP010835276 ISBN: 978-0-7803-9354-7
- RENHUI DOU ET AL: "The Data-View Model of IEC 61850 Server" POWER SYSTEM TECHNOLOGY, 2006. POWERCON 2006. INTERNATIONAL CONFERENCE ON, IEEE, PI, 1. Oktober 2006 (2006-10-01), Seiten 1-4, XP031053311 ISBN: 978-1-4244-0110-9
- GWAN-SU KIM ET AL: "A study on IEC 61850 based communication for intelligent electronic devices" SCIENCE AND TECHNOLOGY, 2005. KORUS 2005. PROCEEDINGS. THE 9TH RUSSIAN 20050626; 20050626 - 20050702 PISCATAWAY, NJ, USA,IEEE, US, 26. Juni 2005 (2005-06-26), Seiten 765-770, XP010837120 ISBN: 978-0-7803-8943-4
- HOGA C ET AL: "IEC 61850: open communication in practice in substations" POWER SYSTEMS CONFERENCE AND EXPOSITION, 2004. IEEE PES NEW YORK CITY, NY, USA 10-13 OCT. 2004, PISCATAWAY, NJ, USA,IEEE, 10. Oktober 2004 (2004-10-10), Seiten 1531-1536, XP010787994 ISBN: 978-0-7803-8718-8
- BRAND K-P: "The standard IEC 61850 as prerequisite for intelligent applications in substations" POWER ENGINEERING SOCIETY GENERAL MEETING, 2004. IEEE DENVER, CO, USA 6-10 JUNE 2004, PISCATAWAY, NJ, USA,IEEE, 6. Juni 2004 (2004-06-06), Seiten 714-718, XP010756486 ISBN: 978-0-7803-8465-1
- WEBER J B: "Applying Visual Basic for Human Machine Interface Applications" INTERNET CITATION, [Online] XP002238913 Gefunden im Internet: URL:http://www.softwaretoolbox.com/ims99/s wtoolboxims99final.pdf> [gefunden am 2003-04-17]
- "LabView, Control Design Toolkit User Manual passage", LABVIEW CONTROL DESIGN TOOLKIT USER MANUAL, NATIONAL INSTRUMENTS, AUSTIN, TX, US, 1 April 2004 (2004-04-01), page complete, XP002386352,

## Beschreibung

Die Erfindung betrifft eine Vorrichtung und ein Verfahren zum Projektieren von Feldgeräten einer technischen Anlagen, insbesondere einer Kraftwerksanlage zur Energieerzeugung, wie etwa einer Dampfturbinen- oder einer Gasturbinenanlage.

Bei bekannten Kraftwerksanlagen werden sämtliche Funktionen der einzelnen Komponenten der Kraftwerksanlage insgesamt mit einem Leitsystem gesteuert. Dabei ist es erforderlich, an das Leitsystem sogenannte Feldgeräte betrieblich anzukoppeln, mit denen insbesondere Überwachungs- und Sicherungs-Funktionen für die einzelnen Komponenten der Kraftwerksanlage realisiert sind.

Derartige Feldgeräte sind beispielsweise die Messeinrichtungen eines Traforeglers, eines Trafoschutzes gegen Überspannung oder etwa eines Motorschutzes gegen Überspannung.

Um derartige Feldgeräte an das Leitsystem funktional anzubinden, stehen derzeit Werkzeuge bzw. Programmiervorrichtungen zur Verfügung, welche in der Regel von den Anbietern der einzelnen Feldgeräte bereit gestellt werden und in einer tabellarischen Benutzeroberfläche ein Projektieren der funktionalen Ankopplung des Feldgeräts an das Leitsystem und der Feldgeräte untereinander ermöglichen. Die Art und Weise der Bedienung derartiger Werkzeuge ist aber stark abhängig vom jeweils zur Verfügung gestellten Werkzeug, vom Typ des Feldgeräts und auch von dessen Anbieter.

In der WO 2005/109122A werden für eine verfahrenstechnische Umgebung graphische Elemente beschrieben, welche in mehrfacher Weise visualisierbar sind. Diese graphischen Elemente umfassen Anzeigeeinheiten, Anzeigeeditoren oder sonstige graphischen Anzeigen. Werden die graphischen Elemente in einer verfahrenstechnischen Anlage ausgeführt, so werden dem Benutzer Informationen über die Prozessumgebung wie beispielsweise der Zustand eines Aggregats angezeigt. Bei den graphischen Elementen handelt es sich um ausführbare Objekte, welche Eigenschaften oder Variablen enthalten, die wiederum mit entsprechenden Prozesseinheiten auf einer Benutzeroberfläche verbunden sind. Die graphischen Elemente können in unterschiedlichen Stilen und graphischen Normen visualisiert werden.

Der Fachartikel von T.S. Sidhu et al."Control and Automation of power system substation using IEC61850 communication", Proceedings of the 2005 IEEE Conference on Control Applications, Toronto, CA, Aug. 28-31, 2005, S. 1331 bis 1336 gibt einen Überblick und zwei Anwendungsbeispiele zu der IEC-Norm 61850. IEC 61850 ist eine weltweit akzeptierte Norm für die Kommunikation auf Ethernet-Basis in Schaltanlagen. Hierbei werden unterschiedliche Protokolle genutzt. Ferner wird hierbei jede Steuerungs- oder Automatisierungsfunktion mittels sog. Logischer Knoten ("engl. logical nodes") dargestellt.

Die funktionale Anbindung von Feldgeräten bei derartigen technischen Anlagen ist daher derzeit vergleichsweise aufwendig und schulungsintensiv. Ferner ist eine derart erstellte Anbindung stets sehr individuell gestaltet und in der Regel nicht in das eigentliche Leitsystem der Kraftwerksanlage einbindbar. Das derart projektierte Feldgerät stellt vielmehr einen eigenständigen Steuerungs- und Regelungsbaustein dar, der sich funktional außerhalb des Leitsystems befindet und entsprechend von diesem nicht vollumfänglich überwacht, ausgewertet und auf Fehler geprüft werden kann.

Es ist eine Aufgabe der vorliegenden Erfindung eine Vorrichtung und ein Verfahren zum Projektieren von Feldgeräten einer technischen Anlage, insbesondere einer Kraftwerksanlage, bereitzustellen, bei der bzw. dem die oben genannten Nachteile überwunden sind und insbesondere eine einfache und kostengünstige funktionale Einbindung der Feldgeräte in die zugehörige technische Anlage möglich ist.

Die Aufgabe ist erfindungsgemäß mit einer Vorrichtung gemäß Anspruch 1 und einem Verfahren gemäß Anspruch 6 gelöst. Vorteilhafte Weiterbildungen der Erfindung sind in den abhängigen Ansprüchen beschrieben.

Gemäß der Erfindung sind eine Vorrichtung und ein Verfahren zum Projektieren von Feldgeräten einer technischen Anlage, insbesondere einer Kraftwerksanlage, in ein Leitsystem der technischen Anlage vorgesehen, bei der bzw. dem mit einem Mittel mindestens zwei Feldgeräte als je mindestens ein Datenobjekt computerimplementiert dargestellt werden und ferner mit einem Mittel mindestens eine Verbindung zwischen den beiden Feldgeräten computerimplementiert dargestellt wird.

Die erfindungsgemäße Lösung stellt damit eine Grundsystematik bereit, mittels der nahezu beliebige Feldgeräte in strukturell gleicher und damit für jeden Bediener der erfindungsgemäßen Vorrichtung einfach zu erlernender Weise in eine technische Anlage funktional eingekoppelt werden können.

Das Mittel zum computerimplementierten Darstellen mindestens zweier Feldgeräte als je mindestens ein Datenobjekt ist besonders bevorzugt eine graphische Anzeigeeinrichtung, an der mittels einer entsprechenden (vorteilhaft ebenfalls graphischen) Bedieneinrichtung das einzelnen Feldgerät als ein graphisches Objekt bzw. ein Symbol computerimplementiert dargestellt wird. Die Verbindungen, welche erfindungsgemäß zwischen den Datenobjekten und/oder auch dem Leitsystem selbst computerimplementiert dargestellt werden, werden an einer derartigen graphischen Anzeigeeinrichtung bevorzugt mittels einer Verbindungslinie visualisiert.

Bevorzugt sind ferner das Mittel zum computerimplementierten Darstellen mindestens zweier Feldgeräte als je mindestens ein Datenobjekt sowie der entsprechende erfindungsgemäße Verfahrensschritt dazu angepasst, das einzelne Feldgerät als mindestens einen logischen Knoten eines standardisierten Feldbusprotokolls, insbesondere gemäß IEC61850, computerimplementiert darzustellen. Durch die in einem derartigen Feldbusprotokoll vorgegebenen logischen Knoten (welche auch als "Logical Nodes" bezeichnet werden) werden erfindungsgemäß bevorzugt Funktionsbausteine (wie beispielsweise eine Messeinrichtung) des jeweiligen Feldgeräts als logische Knoten computerimplementiert dargestellt. Dabei wird insbesondere der einzelne Funktionsbaustein durch entsprechende Ein- und/oder Ausgänge abgebildet. Eine Kommunikation zwischen den einzelnen Funktionsbausteinen und/oder zwischen verschiedenen Feldgeräten wird bevorzugt ebenfalls als eine Verbindung in Form einer Verbindungslinie projektiert.

Erfindungsgemäß werden ferner (insbesondere mittels eines graphischen Bediengeräts) mehrere Feldgeräte zu einem logischen Gerät und/oder mehrere Funktionsbausteine zu einem Feldgerät gruppiert. Mittels derartiger Gruppierungen (welche hier auch als Makrotechnik bezeichnet werden) können erfindungsgemäß nahezu beliebige Arten und Formen von Feldgeräten und logischen Geräten computerimplementiert dargestellt und entsprechend in ein Leitsystem einer Kraftwerksanlage eingebunden werden. Entsprechend können auf diese Art und Weise nahezu beliebige, real existierende Feldgeräte bzw. physikalische Geräte computerimplementiert dargestellt werden.

Zur weiteren Vereinfachung der erfindungsgemäß geschaffenen Projektierung von Feldgeräten einer technischen Anlagen in deren Leitsystem werden ferner bevorzugt Rohdatenobjekte aus einem Speicher bereitgestellt, insbesondere einem Speicher des Leitsystems, welche einzeln Funktionsbausteine und/oder Feldgeräte und/oder logische Geräte darstellen und nachfolgend beim eigentlichen Projektieren der Feldgeräte durch ein Ausfüllen und Ergänzen des Rohdatenobjekts mit (im speziellen Fall vorliegenden) realen Werten zum vollständig projektierten Feldgerät ergänzt werden können. Ein derartiges Ergänzen ist einfacher und kostengünstiger, als ein vollständiges Neugenerieren eines Feldgeräts.

Die oben genannten Verbindungen zwischen dem Datenobjekt und dem Leitsystem, wie auch zwischen den einzelnen Datenobjekten der erläuterten Makrotechnik werden erfindungsgemäß bevorzugt als ein vom eigentlichen Leitsystem unterschiedlicher Verbindungstyp computerimplementiert dargestellt. Auf diese Art und Weise kann vom Leitsystem ein erfindungsgemäß angekoppeltes "externes" Feldgerät als solches identifiziert und entsprechend ggf. speziell überwacht und/oder angesprochen werden. Alternativ können Verbindungen zwischen Feldgeräten von denen innerhalb des Leitsystems oder zu und vom Leitsystem durch Interpretation unterschieden werden.

Die erfindungsgemäß projektierten Feldgeräte können bevorzugt direkt vom Leitsystem der technischen Anlage geladen werden oder durch einen (insbesondere in standardisierten Feldbusprotokollen definierten) Dateiexport bereitgestellt werden. Als Dateiformat für einen derartigen Dateiexport werden bevorzugt sogenannte XML-Dateien verwendet. Derartige Dateien können an bekannten Feldgeräten bereits heute importiert werden, um diese ihrerseits an ein Leitsystem funktional anzukoppeln. Die erfindungsgemäß als mindestens ein Datenobjekt dargestellten computerimplementierten Feldgeräte bzw. deren Funktionsbausteine können also zusammen mit den erfindungsgemäß computerimplementiert dargestellten Verbindungen zwischen den Datenobjekten als eine Datei gespeichert und entsprechend auch nahezu beliebig an technischen Anlagen bereitgestellt werden.

Die erfindungsgemäße Lösung ermöglicht insbesondere eine einheitliche Projektierung auch verschiedenster Feldgeräte und stellt dazu ferner vorteilhaft eine einheitliche Konfigurationsmöglichkeit, insbesondere in Form einer graphischen Bedienungsoberfläche, zur Verfügung. Das Integrieren erfindungsgemäß projektierter Feldgeräte in ein Leitsystem ist besonders einfach und kostengünstig. Es kann darüber hinaus derart vollständig durchgeführt werden, dass im Leitsystem auch wirklich nahezu sämtliche Funktionen des Feldgeräts abgebildet und für einen Benutzer des Leitsystems erkennbar sind. Durch die oben erläuterte Makrotechnik können Feldgeräte nahezu beliebiger Konstitution computerimplementiert dargstellt und zugleich für einen Benutzer in übersichtlicher Weise veranschaulicht werden.

Nachfolgend wird ein Ausführungsbeispiel einer erfindungsgemäßen Vorrichtung und eines Verfahrens zum Projektieren von Feldgeräten einer technischen Anlage anhand der beigefügten schematischen Zeichnungen näher erläutert. Es zeigt:
- Fig. 1: eine erste, stark vereinfachte Darstellung eines Ausführungsbeispiels einer erfindungsgemäßen Vorrichtung zum Projektieren von Feldgeräten und
- Fig. 2: eine zweite, stark vereinfachte Darstellung der Vorrichtung gemäß Fig. 1.

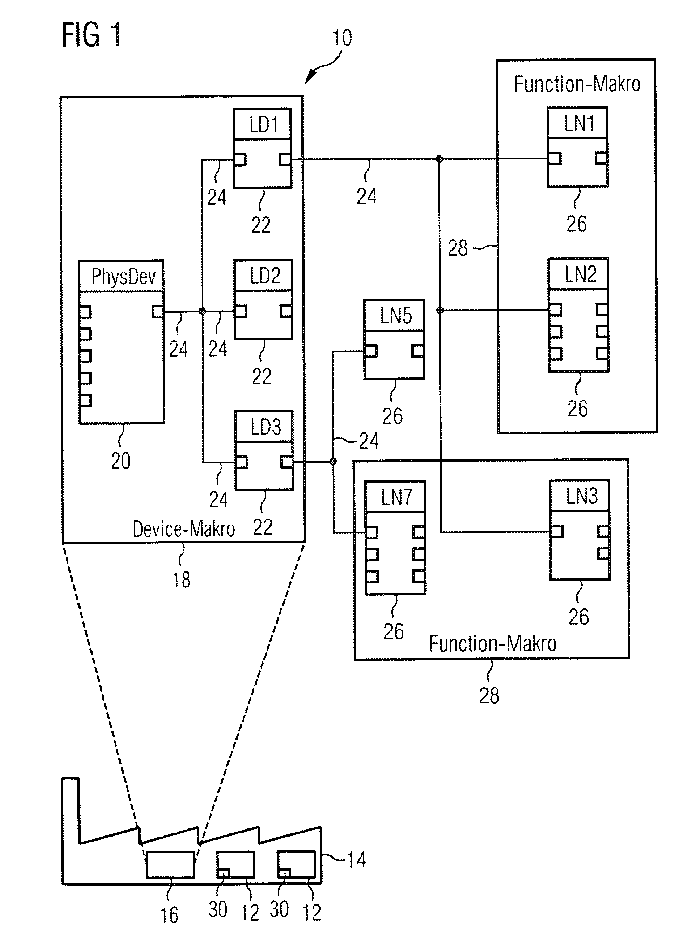

Fig. 1 veranschaulicht eine Vorrichtung 10 zum Projektieren von Feldgeräten 12 in Gestalt je eines Trafoschutzes einer technischen Anlage 14 in Form einer Kraftwerksanlage. Die Vorrichtung 10 ist in ein Leitsystem 16 der technischen Anlage 14 implementiert.

Die Vorrichtung 10 umfasst dabei eine graphische Anzeige- und Bedienoberfläche mit einem Geräte-Makro 18 (ein sogenanntes Device-Makro), welches aus einem physikalischen Gerät 20 (PhysDev) und drei logischen Geräten 22 (jeweils ein sogenanntes Logical Device, LD1, LD2, LD3) aufgebaut ist. Das physikalische Gerät 20 ist über Verbindungen 24 mit den logischen Geräten 22 funktional verkoppelt.

An zwei der logischen Geräte 22 ist über Verbindungen 24 eine Kopplung zu logischen Knoten 26 (so genannte Logial Nodes, LN1, LN2, LN3, LN5, LN7) hergestellt, von denen einzelne zu Funktions-Makros (28) (je ein so genanntes Function-Makro) zusammengefasst sind.

Die einzelnen logischen Knoten 26 sind dabei ausgehend von einem (weiter nicht näher veranschaulichten) Rohdatenobjekt projektiert worden, indem dem jeweiligen, im Leitsystem 16 zuvor gespeicherten Rohdatenobjekt reale Werte der technischen Anlage 14 zugeordnet worden sind. Die derart computer-implementiert dargestellten Datenobjekte in Form der logischen Knoten 26 sind nachfolgend mit Hilfe der Vorrichtung 10 mittels der Verbindungen 24 computerimplementiert funktional gekoppelt worden. Auf diese Weise sind die Funktionalitäten der Feldgeräte 12 und deren Kommunikation zwischen ihren Ein- und/oder Ausgängen abgebildet worden. So ist beispielsweise mit einem logischen Knoten 26 eine Messeinrichtung 30 am Feldgerät 12 in Form eines Spannungsmessers funktional abgebildet worden.

Das computerimplementierte Abbilden bzw. Darstellen der einzelnen genannten Makros erfolgt dabei innerhalb des Leitsystems 16 an der graphischen Anzeige- und Bedienoberfläche, insbesondere in Form einer Bildschirmmaske, mit graphischen Symbolen. Dabei wird für das einzelne Geräte-Makro 18 eine XML-Datei generiert, welche die einzelnen Datenobjekte der computerimplementiert dargstellten Feldgeräte 12 und die dazwischen computerimplementiert dargestellten Verbindungen 24 strukturiert zusammenfasst.

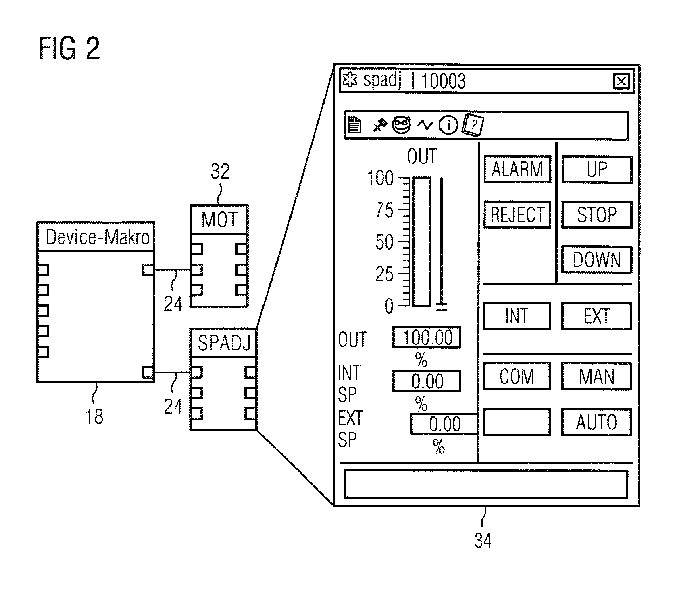

In Fig. 2 ist veranschaulicht, wie derart projektierte Feldgeräte 12 innerhalb der technischen Anlage 14 und dem zugehörigen Leitsystem 16 im Betrieb der technischen Anlage 14 betrieben und für den Anlagenbediener veranschaulicht werden.

Die Fig. 2 zeigt das im Leitsystem 16 hinterlegte Geräte-Makro 18 in Form der genannten XML-Datei, welche vom Leitsystem 16 verarbeitet wird. Dem Geräte-Makro 18 sind dabei über Verbindungen 24 eine Schnittstelle 32 (MOT) zum eigentlichen Feldgerät 12 sowie eine graphische Anzeige- und Einstell-Einrichtung 34 (SPADJ - Setpoint Adjuster) zugeordnet.

Die Anzeige- und Einstell-Einrichtung 34 umfasst graphische Anzeigen und auch numerische Anzeigen über einzelne physikalische Größen am zugehörigen Feldgerät 12 sowie Eingabefelder für insbesondere Grenzwerte am Feldgerät 12. Die Anzeige- und Einstell-Einrichtung 34 kann am Leitsystem 16 und insbesondere an einem Bedienungsrechner dieses Leitsystems 16 einem Bediener der technischen Anlage 14 zur Anzeige gebracht werden. Der Bediener kann dabei auch einzelne Werte der genannten Größen an der Anzeige- und Einstell-Einrichtung 34 verändern.

Das Projektieren der Feldgeräte 12 mit Hilfe der Vorrichtung 10 und der dabei verwendeten logischen Struktur mittels der Elemente 18, 20, 22, 24, 26 und 28 erfolgt also allein durch eine graphische, symbolorientierte Projektierungsvorrichtung, wie sie in Fig. 1 und 2 veranschaulicht ist. Bei der Projektierung werden die Symbole und Standards verwendet, wie sie im Feldbusprotokoll gemäß IEC61850 beschrieben sind. Es ist dadurch eine in sich konsistente Struktur der Projektierung geschaffen, welche auch das Einbinden der derart bei der Projektierung verbundenen Datenobjekte in das gesamte Leitsystem 16 vereinfacht. Ferner wird beim Projektieren der einzelnen Verbindungen 24 ggf. ein spezieller Verbindungstyp zugeordnet, sodass das Leitsystem 16 diese Verbindungen 24 von internen Verbindungen des Leitsystems unterscheiden kann. Die genannte XML-Datei kann entweder direkt in das Leitsystem 16 geladen oder in das zugehörige Feldgerät 12 importiert werden. Dieses Laden und/oder der eigentliche Betrieb der Feldgeräte 12 kann besonders bevorzugt vom Leitsystems 16 ferngesteuert werden.

Die in Fig. 1 veranschaulichte Strukturierung der projektierten Feldgeräte 12 mittels der genannten Makros dienst insbesondere der besseren Übersichtlichkeit und der vereinfachten Projektierung. Diese ist besonders einfach möglich, indem durch die von der Norm bzw. dem Feldbusprotokoll IEC61850 vorgegebenen logischen Knoten 26 Funktionsbausteine der Feldgeräte 12 (wie z.B. die Messeinrichtung 30) durch entsprechende Ein- und/oder Ausgänge abgebildet werden. Ferner wird die Kommunikation zwischen verschiedenen Feldgeräten 12 durch die genannten Verbindungen 24 bzw. die gezeigten Verbindungslinien gemäß dem Feldbusprotokoll IEC61850 projektiert. Durch Anwendung der genannten Makrotechnik können die einzelnen logischen Knoten 26 dann wieder zu dem genannten physikalischen Gerät 20 gruppiert werden, sodass der Bediener innerhalb des Leitsystems 16 einen guten Überblick über die Einbindung der Feldgeräte 12 in das Leitsystem 16 erhält. Dabei wird mit der Vorrichtung 10 eine einheitliche Konfigurationsoberfläche verwendet, die insbesondere in das Leitsystem 16 integriert ist.

Das Projektieren erfolgt allein mittels Funktionsbausteinen, welche mit ihren Ein- und/oder Ausgängen als einzelne Datenobjekte miteinander verbunden werden. Gerätespezifische Programmierkenntnisse sind dabei nicht erforderlich.

Ferner ist mit der Vorrichtung 10 für eine durchgängige Dokumentation der technischen Anlagen 14 und der daran angekoppelten Feldgeräte 12 gesorgt.

## Patentansprüche

1. Vorrichtung (10) zum Projektieren von Feldgeräten (12) einer technischen Anlage (14), insbesondere einer Kraftwerksanlage, für eine funktionale Einbindung der Feldgeräte in ein Leitsystem (16) der technischen Anlage (14),
- wobei ein Mittel (18, 28) zum computerimplementierten Darstellen mindestens zweier Feldgeräte (12) als je mindestens ein Datenobjekt (20, 22, 26) und ein Mittel (18, 28) zum computerimplementierten Darstellen mindestens einer Verbindung (24) zwischen den Datenobjekten (20, 22, 26) der beiden Feldgeräte (12) vorgesehen sind,
- wobei die Datenobjekte (20, 22, 26) auf Funktionsbausteine der Feldgeräte (12) durch entsprechende Ein- und/oder Ausgänge abgebildet werden und das Projektieren allein mittels der Funktionsbausteine erfolgt, welche mit ihren Ein- und/oder Ausgängen als die einzelnen Datenobjekte (20, 22, 26) miteinander verbunden werden,
**dadurch gekennzeichnet, dass**
bei dem Projektieren der Feldgeräte mehrere der Funktionsbausteine zu einem Feldgerät (12) und/oder mehrere der Feldgeräte (12) zu einem logischen Gerät (22) durch die Verbindungen zwischen den entsprechenden Ein- und/oder Ausgängen der Funktionsbausteine funktional gekoppelt werden und diese Struktur der projektierten Feldgeräte für die Einbindung der Feldgeräte in das Leitsystem bereitgestellt wird.

2. Vorrichtung nach Anspruch 1,
**dadurch gekennzeichnet, dass**
das Mittel (18, 28) zum computerimplementierten Darstellen mindestens zweier Feldgeräte (12) als je mindestens ein Datenobjekt (20, 22, 26) dazu angepasst ist, das einzelne Feldgerät (12) als mindestens einen logischen Knoten (26) eines standardisierten Feldbusprotokolls, insbesondere gemäß IEC61850, computerimplementiert darzustellen.

3. Vorrichtung nach Anspruch 1 oder 2,
**dadurch gekennzeichnet, dass**
das Mittel (18, 28) zum computerimplementierten Darstellen mindestens zweier Feldgeräte (12) als je mindestens ein Datenobjekt (20, 22, 26) dazu angepasst ist, mehrere Feldgeräte (12) zu einem logischen Gerät (22) zu gruppieren.

4. Vorrichtung nach einem der Ansprüche 1 bis 3,
**dadurch gekennzeichnet, dass**
das Mittel (18, 28) zum computerimplementierten Darstellen mindestens zweier Feldgeräte (12) als je mindestens ein Datenobjekt (20, 22, 26) dazu angepasst ist, ein das einzelne Feldgerät (12) computerimplementiert darstellendes Rohdatenobjekt aus einem Speicher, insbesondere einem Speicher des Leitsystems (16), zu laden.

5. Vorrichtung nach einem der Ansprüche 1 bis 4,
**dadurch gekennzeichnet, dass**
das Mittel (18, 28) zum computerimplementierten Darstellen mindestens einer Verbindung (24) zwischen den Datenobjekten (20, 22, 26) der beiden Feldgeräte (12) dazu angepasst ist, die Verbindung (24) als einen vom eigentlichen Leitsystem (16) unterschiedlichen Verbindungstyp computerimplementiert darzustellen.

6. Verfahren zum Projektieren von Feldgeräten (12) einer technischen Anlage (14), insbesondere einer Kraftwerksanlage, für eine funktionale Einbindung der Feldgeräte in ein Leitsystem (16) der technischen Anlage (14), mit den Schritten: - Computerimplementiertes Darstellen mindestens zweier Feldgeräte (12) als je mindestens ein Datenobjekt (20, 22, 26) und computerimplementiertes Darstellen mindestens einer Verbindung (24) zwischen den Datenobjekten (20, 22, 26) der beiden Feldgeräte (12), wobei die Datenobjekte (20, 22, 26) auf Funktionsbausteine der Feldgeräte (12) durch entsprechende Ein- und/oder Ausgänge abgebildet werden und das Projektieren allein mittels der Funktionsbausteine erfolgt, welche mit ihren Ein- und/oder Ausgängen als die einzelnen Datenobjekte (20, 22, 26) miteinander verbunden werden,
**dadurch gekennzeichnet, dass**
bei dem Projektieren der Feldgeräte mehrere der Funktionsbausteine zu einem Feldgerät (12) und/oder mehrere der Feldgeräte (12) zu einem logischen Gerät (22) durch die Verbindungen zwischen den entsprechenden Ein- und/oder Ausgängen der Funktionsbausteine funktional gekoppelt werden und diese Struktur der projektierten Feldgeräte für die Einbindung der Feldgeräte in das Leitsystem bereitgestellt wird.

7. Verfahren nach Anspruch 6,
bei dem im Schritt computerimplementiertes Darstellen mindestens zweier Feldgeräte (12) als je mindestens ein Datenobjekt (20, 22, 26) das einzelne Feldgerät (12) als mindestens ein logischer Knoten (26) eines standardisierten Feldbusprotokolls, insbesondere gemäß IEC61850, computerimplementiert dargestellt wird.

8. Verfahren nach Anspruch 6 oder 7,
bei dem im Schritt computerimplementiertes Darstellen mindestens zweier Feldgeräte (12) als je mindestens ein Datenobjekt (20, 22, 26) mehrere Feldgeräte (12) zu einem logischen Gerät (22) gruppiert werden.

9. Verfahren nach einem der Ansprüche 6 bis 8,
bei dem im Schritt computerimplementiertes Darstellen mindestens zweier Feldgeräte (12) als je mindestens ein Datenobjekt (20, 22, 26) ein das einzelne Feldgerät (12) computerimplementiert darstellendes Rohdatenobjekt aus einem Speicher, insbesondere einem Speicher des Leitsystems (16), geladen wird.

10. Verfahren nach einem der Ansprüche 6 bis 9,
bei dem im Schritt computerimplementiertes Darstellen mindestens einer Verbindung (24) zwischen den Datenobjekten (20, 22, 26) der beiden Feldgeräte (12) die Verbindung (24) als ein vom eigentlichen Leitsystem (16) unterschiedlicher Verbindungstyp computerimplementiert dargestellt wird.

## Claims

1. Apparatus (10) for projecting field devices (12) of a technical system (14), in particular a power plant system, for a functional involvement of the field devices, into a control system (16) of the technical system (14),
- with a means (18, 28) for the computer-implemented display of at least two field devices (12) as at least one data object (20, 22, 26) in each case and a means (18, 28) for the computer-implemented display of at least one connection (24) between the data objects (20, 22, 26) of the two field devices (12),
- wherein the data objects (20, 22, 26) are reproduced on functional modules of the field devices (12) by means of corresponding input and/or outputs and the projecting takes place solely by means of the functional modules which are connected to one another with their input and/or outputs as the individual data objects (20, 22, 26),
**characterised in that**
with the projecting of the field devices, a number of functional modules is coupled functionally to a field device (12) and/or a number of field devices (12) is coupled functionally to a logical device (22) by the connections between the corresponding inputs and/or outputs of the functional modules and this structure of the projected field devices is provided for involvement of the field devices in the control system.

2. Apparatus according to claim 1,
**characterised in that** the means (18, 28) for the computer-implemented display of at least two field devices (12) as at least one data object (20, 22, 26) in each case is adapted for the computer-implemented display of the individual field device (12) as at least one logical node (26) of a standardised field bus protocol, especially according to IEC61850.

3. Apparatus according to claim 1 or 2,
**characterised in that** the means (18, 28) for the computer-implemented display of at least two field devices (12) as at least one data object (20, 22, 26) in each case is adapted to group a number of field devices (12) into one logical device (22).

4. Apparatus according to one of claims 1 to 3,
**characterised in that** the means (18, 28) for the computer-implemented display of at least two field devices (12) as at least one data object (20, 22, 26) in each case is adapted to load a raw data object representing the individual field device (12) in a computer-implemented display from a memory, especially a memory of the control system (16).

5. Apparatus according to one of claims 1 to 4,
**characterised in that** the means (18, 28) for the computer-implemented display of at least one connection (24) between the data objects (20, 22, 26) of the two field devices (12) is adapted for computer-implemented display of the connection (24) as a connection type different from the actual control system (16).

6. Method for the projecting of field devices (12) of a technical system (14), in particular a power plant system, for a functional involvement of the field devices into a control system (16) of the technical system (14), with the steps:
- computer-implemented display of at least two field devices (12) as at least one data object (20, 22, 26) in each case and computer-implemented display of at least one connection (24) between the data objects (20, 22, 26) of the two field devices (12), wherein the data objects (20, 22, 26) are reproduced on functional modules of the field devices (12) by means of corresponding inputs and/or outputs and the projecting takes place solely by means of the functional modules, which are connected to one another as the individual data objects (20, 22, 26) with their inputs and/or outputs,
**characterised in that**
with the projecting of the field devices, a number of functional modules are coupled functionally to a field device (12) and/or a number of field devices (12) is coupled functionally to a logical device (22) by the connections between the corresponding inputs and/or outputs of the functional module and this structure of the projected field devices is provided in the control system for involvement of the field devices.

7. Method according to claim 6,
in which, in the step for the computer-implemented display of at least two field devices (12) as at least one data object (20, 22, 26) in each case, the individual field device (12) is presented in a computer-implemented display as at least one logical node (26) of a standardised field bus protocol, in particular in accordance with IEC61850.

8. Method according to claim 6 or 7,
in which, in the step for the computer-implemented display of at least two field devices (12) as at least one data object (20, 22, 26) in each case a number of field devices (12) are grouped together to form one logical device (22).

9. Method according to one of claims 6 to 8,
in which, in the step for the computer-implemented display of at least two field devices (12) as at least one data object (20, 22, 26) in each case, a raw data object showing a computer-implemented display of the individual field device (12) is loaded from a memory, especially a memory of the control system (16).

10. Method according to one of claims 6 to 9,
in which, in the step for the computer-implemented display of at least one connection (24) between the data objects (20, 22, 26) of the two field devices (12), the connection (24) is shown as a computer-implemented display of a connection type differing from the actual control system (16).

## Revendications

1. Dispositif (10) de planification d'appareils (12) de terrain d'une installation (14) technique, notamment d'une centrale électrique, pour une incorporation fonctionnelle des appareils de terrain dans un système (16) de conduite de l'installation (14) technique,
- dans lequel il est prévu un moyen (18, 28) de représentation assisté par ordinateur d'au moins deux appareils (12) de terrain, sous la forme respectivement d'au moins un objet (20, 22, 26) de données, et un moyen (18, 28) de représentation assistée par ordinateur d'au moins une liaison (24) entre les objets (20, 22, 26) de données des deux appareils (12) de terrain,
- dans lequel les objets (20, 22, 26) de données sont formés sur des modules fonctionnels des appareils (12) de terrain par des entrées et/ou des sorties correspondantes et la planification s'effectue seulement au moyen des modules fonctionnels qui sont reliés les uns aux autres en tant qu'objets (20, 22, 26) de données individuels par leurs entrées et/ou leurs sorties,
**caractérisé en ce que**
lors de la planification des appareils de terrain, on réunit fonctionnellement plusieurs des modules fonctionnels en un appareil (12) de terrain et/ou plusieurs des appareils (12) de terrain en un appareil (12) logique par des liaisons entre les entrées/sorties correspondantes des modules fonctionnels et on met à disposition cette structure des appareils de terrain planifiée pour l'incorporation des appareils de terrain dans le système de conduite.

2. Dispositif suivant la revendication 1,
**caractérisé en ce que**
le moyen (18, 28) de représentation assisté par ordinateur d'au moins deux appareils (12) de terrain sous la forme respectivement d'au moins un objet (20, 22, 26) de données est adapté pour représenter de manière assistée par ordinateur l'appareil (12) individuel de terrain sous la forme d'au moins un noeud (26) logique d'un protocole de bus de terrain normalisé, notamment suivant IEC61850.

3. Dispositif suivant la revendication 1 ou 2,
**caractérisé en ce que**
le moyen (18, 28) de représentation assisté par ordinateur d'au moins deux appareils (12) de terrain sous la forme d'au moins un objet (20, 22, 26) de données est adapté pour regrouper plusieurs appareils (12) de terrain en un appareil (22) logique.

4. Dispositif suivant l'une des revendications 1 à 3,
**caractérisé en ce que**
le moyen (18, 28) de représentation assisté par ordinateur d'au moins deux appareils (12) de terrain sous la forme d'au moins un objet (20, 22, 26) de données est adapté pour charger un objet de données brut, représentant de manière assistée par ordinateur l'appareil (12) de terrain individuel à partir d'une mémoire, notamment d'une mémoire du système (16) de conduite.

5. Dispositif suivant l'une des revendications 1 à 4,
**caractérisé en ce que**
le moyen (18, 28) de représentation assisté par ordinateur d'au moins une liaison (24) entre les objets (20, 22, 26) de données des deux appareils (12) de terrain est adapté pour représenter de manière assistée par ordinateur la liaison (24) sous la forme d'un type de liaison différent du système (16) de conduite proprement dit.

6. Procédé de planification d'appareils (12) de terrain d'une installation (14) technique, notamment d'une centrale électrique, pour une incorporation fonctionnelle des appareils de terrain dans un système (16) de conduite de l'installation (14) technique, comprenant les stades : - la représentation assistée par ordinateur d'au moins deux appareils (12) de terrain sous la forme d'au moins un objet (20, 22, 26) de données et la représentation assistée par ordinateur d'au moins une liaison (24) entre les objets (20, 22, 26) de données des deux appareils (12) de terrain, les objets (20, 22, 26) de données étant formés sur des modules fonctionnels des appareils (12) de terrain par des entrées et/ou des sorties correspondantes et la planification s'effectuant en seulement au moyen des modules fonctionnels qui sont reliés entre eux par leurs entrées et/ou leurs sorties sous la forme des objets (20, 22, 26) de données individuels,
**caractérisé en ce que**
lors de la planification des appareils de terrain, on réunit fonctionnellement plusieurs des modules fonctionnels en un appareil (12) de terrain et/ou plusieurs des appareils (12) de terrain en un appareil (12) logique par des liaisons entre les entrées/sorties correspondantes des modules fonctionnels et on met à disposition cette structure des appareils de terrain planifiée pour l'incorporation des appareils de terrain dans le système de conduite.

7. Procédé suivant la revendication 6,
dans lequel, dans le stade de la représentation assistée par ordinateur d'au moins deux appareils (12) de terrain sous la forme respectivement d'au moins un objet (20, 22, 26) de données, on représente d'une manière assistée par ordinateur l'appareil (12) de terrain individuel sous la forme d'au moins un noeud (26) logique d'un protocole de bus de terrain normalisé, notamment suivant IEC61850.

8. Procédé suivant la revendication 6 ou 7,
dans lequel, dans le stade de la représentation assistée par ordinateur d'au moins deux appareils (12) de terrain sous la forme d'au moins un objet (20, 22, 26) de données, on regroupe plusieurs appareils (12) de terrain en un appareil (22) logique.

9. Procédé suivant l'une des revendications 6 à 8,
dans lequel, dans le stade de la représentation assistée par ordinateur d'au moins deux appareils (12) de terrain sous la forme d'au moins un objet (20, 22, 26) de données, on charge un objet brut de données, représentant de manière assistée par ordinateur l'appareil (12) de terrain individuel à partir d'une mémoire, notamment d'une mémoire du système (16) de conduite.

10. Procédé suivant l'une des revendications 6 à 9,
dans lequel, dans le stade de la représentation assistée par ordinateur d'au moins une liaison (24) entre les objets (20, 22, 26) de données des deux appareils (12) de terrain, on représente de manière assistée par ordinateur la liaison (24) sous la forme d'un type de liaison différent du système (16) de conduite proprement dit.
